# EUROPEAN PATENT APPLICATION

(11) **EP 2 490 434 A1**
(43) Date of publication of application: **22.08.2012**
(21) Application number: 12154789.7
(22) Date of filing: 09.02.2012
(51) Int. Cl.: H04N 1/387

(54) **An image processing apparatus and a document scanning system having the same**

(30) Priority: 16.02.2011 JP 2011030966
(71) Applicant: Panasonic Corporation, Kadoma-shi Osaka 571-8501 (JP)
(72) Inventor: Shirai, Naomi, Osaka-shi, Osaka, 540-6207 (JP); Arimura, Minoru, Osaka-shi, Osaka, 540-6207 (JP)
(74) Representative: Eisenführ, Speiser & Partner

(57) **Abstract**

An image processing apparatus according to the present invention has an effect which enables to obtain a cutout image by directly specifying an area with a pointer such as a finger or the like on a paper surface of a document such as a book or the like. The present invention is useful as an image processing apparatus and a document scanning system having the same, the image processing apparatus processing an image obtained by scanning a paper surface of a document such as a book or the like.

## Description

### CROSS-REFERENCE TO RELATED APPLICATIONS

The present application claims priority under 35 U.S.C. §119 of Japanese Application No. 2011-030966, filed on February 16, 2011, the disclosure of which is expressly incorporated by reference herein in its entirety.

### BACKGROUND OF THE INVENTION

### 1. Field of the Invention

The present invention is related to an image processing apparatus that processes an image obtained by scanning a paper surface of a document such as a book, and a document scanning system having the image processing apparatus.

### 2. Description of Related Art

A book scanner (document camera) is widely used, which can capture from above a page of a book in a naturally opened state and scan an image of the page. Such a book scanner makes it possible to sequentially scan images of pages while turning the pages, thereby allowing efficient digitization of books (Japanese Patent Laid-open Publication No. 2001-103240).

The book scanner may be used even when an image of only a potion of a paper surface of a book is required. In this case, however, after an image of an entirety or a required area of the book page is captured, a cumbersome work is necessary to load the image data on a PC and to cut out the image of the required area while viewing a screen of the PC.

### SUMMARY OF THE INVENTION

The present invention provides an image processing apparatus and a document scanning system having the same, the image processing apparatus being configured to be capable of obtaining a cutout image by directly specifying an area on a paper surface of a document with a pointer such as a finger.

An image processing apparatus of the present invention includes: a captured image obtainer obtaining a first captured image and a second captured image, the first captured image being an image of a paper surface of a document captured along with a placing surface without a pointer, and the second captured image being an image of the paper surface of the document captured along with the pointer specifying an area to be cut out on the paper surface of the document; a cutout area obtainer detecting a point specified by the pointer from the second captured image and obtaining a cutout area such that a predetermined margin is secured around the specified area provided by connecting the points; a cutout image generator obtaining a cutout image by planarizing a portion of the first captured image corresponding to at least the cutout area obtained by the cutout area obtainer; and an image corrector removing an unnecessary image portion appearing in a peripheral area of the cutout image obtained by the cutout image generator.

A document scanning system of the present invention includes: the image processing apparatus according to the above invention; and an image inputting device having a camera. The image inputting device captures an image of a paper surface of a document along with a placing surface without a pointer and an image of the paper surface of the document along with the pointer specifying an area to be cut out on the paper of the document, and sends the first captured image and the second captured image to the image processing device.

### BRIEF DESCRIPTION OF THE DRAWINGS

The present invention is further described in the detailed description which follows, in reference to the noted plurality of drawings by way of non-limiting examples of exemplary embodiments of the present invention, in which like reference numerals represent similar parts throughout the several views of the drawings, and wherein:
Fig. 1 illustrates an entire configuration of a document scanning system according to the present embodiment;
Fig. 2 is a block diagram illustrating schematic configurations of a book scanner 1 and a PC 2;
Fig. 3 is a flowchart illustrating steps to cut out an image performed by the document scanning system;
Fig. 4 is a flowchart illustrating steps of an outline obtainment (ST 103) shown in Fig. 3;
Figs. 5A and 5B are schematic diagrams describing a procedure of the outline obtainment;
Fig. 6 is a flowchart illustrating steps of a primary mesh model generation (ST 104) shown in Fig. 3;
Figs. 7A and 7B are schematic diagrams describing a procedure of a mesh model generation;
Fig. 8 is a flowchart illustrating steps of a cutout area obtainment (ST 105) shown in Fig. 3;
Fig. 9 is a flowchart illustrating steps of a cutout area obtainment (ST 105) shown in Fig. 3;
Figs. 10A and 10B are schematic diagrams describing procedures of the cutout area obtainments;
Fig. 11 is a flowchart illustrating steps of a secondary mesh model generation and an image transformation (ST 106) shown in Fig. 3;
Figs. 12A to 12C are schematic diagrams describing a procedure of the secondary mesh model generation and the image transformation;
Fig. 13 schematically illustrates a state of a paper surface of a book when a cutout area is specified with a pointer F;
Fig. 14 is a schematic diagram illustrating a specified area obtained by connecting points specified with the pointer F and a cutout area from which an image is actually cut out;
Fig. 15 is a flowchart illustrating steps of a cutout image correction (ST 107) shown in Fig. 3;
Fig. 16 schematically illustrates a sate of each processing performed during the cutout image correction;
Fig. 17 schematically illustrates a sate of each processing performed during the cutout image correction;
Figs. 18A and 18B each schematically illustrate a sate of each processing performed during the cutout image correction; and
Fig. 19 schematically illustrates another example of a processing performed during the cutout image correction.

### DETAILED DESCRIPTION OF THE INVENTION

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description is taken with the drawings making apparent to those skilled in the art how the forms of the present invention may be embodied in practice.

Hereinafter, an embodiment of the present invention is described with reference to drawings.

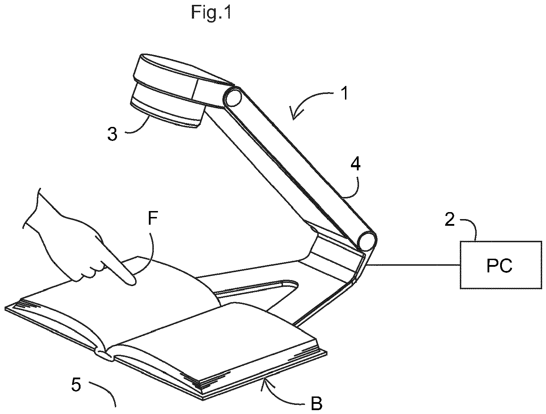

Fig. 1 illustrates an entire configuration of a document scanning system according to the present embodiment. The document scanning system scans an image of a paper surface of a book (document) B, and obtains image data of the paper surface. The document scanning system is configured with a book scanner (image inputting device) 1 and a PC (image processing apparatus) 2.

The book scanner 1 includes a camera 3 capturing an image of a paper surface of the book B and a stand 4 holding the camera 3. The stand 4 is placed on a placing surface 5 such as a desk. The book B is set on the placing surface 5 provided directly below the camera 3. The camera 3 captures an image of a paper surface of the book B. An image of a paper surface is captured in a state where the book B is naturally opened, and a captured image of a two-page spread of the book B is thus obtained. Further, planarization is performed on an image of a distorted paper surface in order to obtain a planarized image of the two-paper surface spread.

Furthermore, in this embodiment, an image of a specified area is cut out by directly specifying the area on a paper surface of the book B with a pointer F such as a finger, a pen, or the like, and thus a planarized cutout image can be obtained. At this time, the book scanner 1 captures an image of the paper surface of the book B along with the placing surface 5 without the pointer F, and the PC 2 generates an image of the paper surface based on the captured image. In addition, the book scanner 1 captures an image of the paper surface of the book B along with the pointer F specifying an area to be cut out on the paper surface of the book B, and the PC 2 identifies a cutout area based on the captured image.

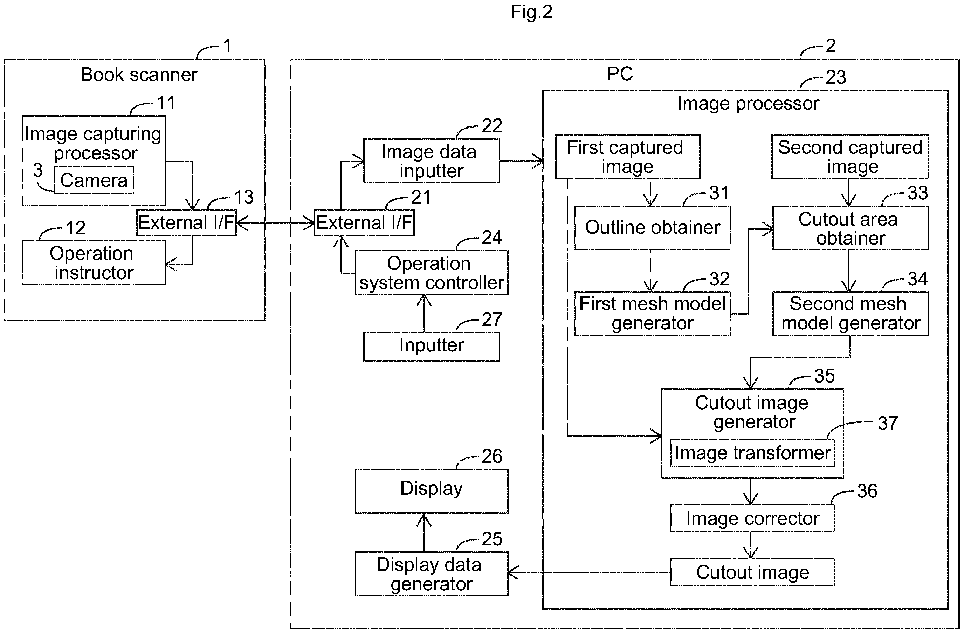

Fig. 2 is a block diagram illustrating schematic configurations of the book scanner 1 and the PC 2. The book scanner 1 includes an image capturing processor 11 having the camera 3, an operation instructor 12, and an external interface 13. The PC 2 includes an external I/F 21, an image data inputter (captured image obtainer) 22, an image processor 23, an operation system controller 24, a display data generator 25, a display 26, and an inputter 27. The image processor 23 and the display data generator 25 of the PC 2 are provided by a software processing in which a CPU executes a program such as an image processing application or the like.

In the PC 2, operation conditions such as resolution, a frame rate, and the like of an image to be captured by the book scanner 1 are input with an operation through the inputter 27 configured with a keyboard or the like. These operation conditions are transmitted from the operation system controller 24 to the book scanner 1. In the book scanner 1, the image capturing processor 11 performs a predetermined operation according to an instruction from the operation instructor 12 based on the operation conditions transmitted from the PC 2.

The image data inputter 22 of the PC 2 stores, in a memory, image data transmitted from the book scanner 1, and outputs the image data to the image processor 23 as needed. The image data inputter 22 obtains a first captured image and a second captured image, the first captured image being an image of a paper surface of the book B captured along with the placing surface 5 without the pointer F, and the second captured image being an image of the paper surface of the book B captured along with the pointer F specifying an area to be cut out on the paper surface of the book B.

The image processor 23 includes an outline obtainer 31, a primary mesh model generator 32, a cutout area obtainer 33, a secondary mesh model generator 34, a cutout image generator 35, and an image corrector 36.

The outline obtainer 31 obtains an outline of the book B from the first captured image. The primary mesh model generator 32 generates a primary mesh model based on the outline information obtained from the first captured image by the outline obtainer 31. The cutout area obtainer 33 detects a point specified by the pointer from the second captured image and obtains a cutout area. The secondary mesh model generator 34 generates a secondary mesh model based on the primary mesh model generated by the primary mesh model generator 32, the secondary mesh model having mesh spacing smaller than that of the first mesh model.

The cutout image generator 35 planarizes a portion of the first captured image corresponding to the cutout area obtained by the cutout area obtainer 33, and obtains a cutout image. The cutout image generator 35 includes an image transformer 37 that transforms a distorted image of a paper surface into a non-distorted image. The image transformer 37 performs a projective transformation (affine transformation) and thus planarizes an image. Thereby, it is possible to obtain an image similar to what is scanned by a flat bed scanner. The image corrector 36 performs an image correction that removes an unnecessary image portion appearing in a peripheral area of the cutout image obtained by the cutout image generator 35.

The cutout area obtainer 33 determines a cutout area using the primary mesh model. The cutout image generator 35 planarizes an image using the secondary mesh model. These will be described in detail later.

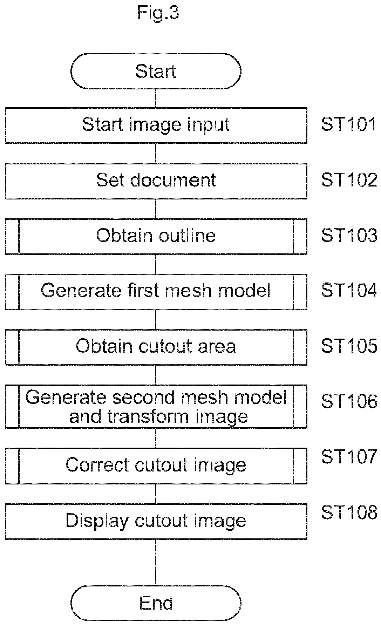

Fig. 3 is a flowchart illustrating steps to cut out an image performed by the document scanning system. First, at the same time when the book scanner 1 is started, a predetermined application is started in the PC 2. Next, image input, that is, image capturing, is started by the book scanner 1, and the captured data is transmitted to the PC 2 (ST 101). Then, a user sets a book below the camera 3 of the book scanner 1 (ST 102). Thereafter, an image of a paper surface of the book B is captured, and the captured image data is transmitted to the PC 2. The image data inputter 22 of the PC 2 obtains a first captured image that is an image of the paper surface of the book B captured along with the placing surface 5 without the pointer F.

In the PC 2, the outline obtainer 31 performs a processing to obtain an outline of the book B from the first captured image (ST 103). Thereafter, based on the outline information obtained by the outline obtainer 31, the primary mesh model generator 32 performs, with respect to an entirety of the book B, a processing to generate a primary mesh model having a coarse mesh (ST 104).

Further, the cutout area obtainer 33 causes a user to perform an operation to specify an area to be cut out on the paper surface of the book B using the pointer F such as a finger, a pen, or the like, obtains a second captured image that is an image of the paper surface of the book B captured along with the pointer F, detects a point specified by the pointer F from the second captured image, and determines a cutout area (ST 105).

Then, with respect to the cutout area obtained by the cutout area obtainer 33, the secondary mesh model generator 32 generates a secondary mesh model based on the primary mesh model generated by the primary mesh model generator 32, the secondary mesh model having a finer mesh than the primary mesh model. Further, based on the secondary mesh model, the cutout image generator 34 performs an image transformation to planarize the image (ST 106).

Thereafter, the image corrector 36 performs an image correction that removes an unnecessary image portion appearing in a peripheral area of the cutout image obtained by the cutout image generator 35 (ST 107). The cutout image obtained above is displayed on the display 26 (ST 108). Thus, the user can confirm whether or not the image has been properly cut out.

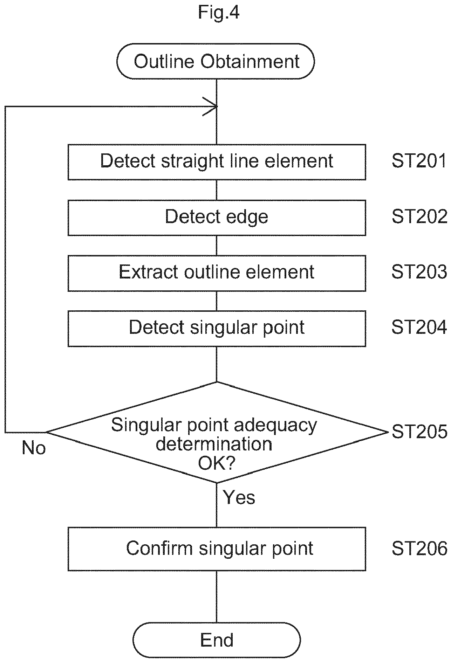

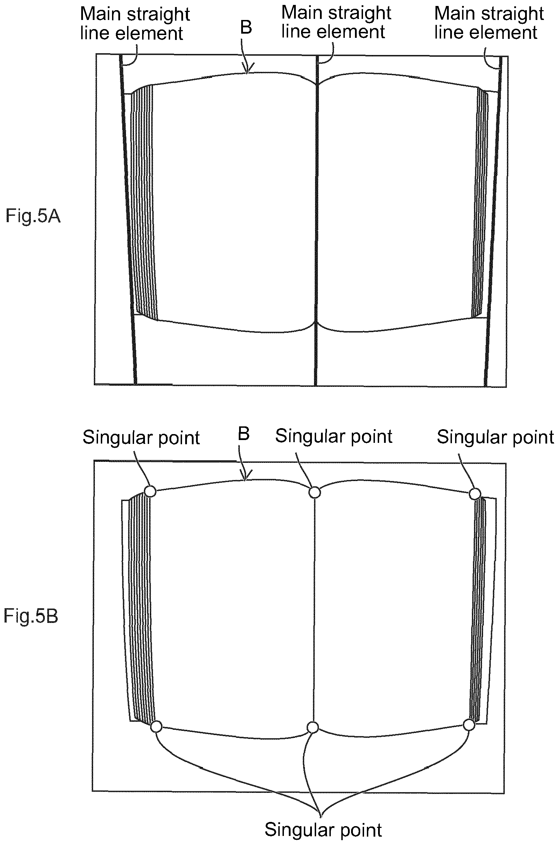

Fig. 4 is a flowchart illustrating steps of an outline obtainment (ST 103) shown in Fig. 3. Figs. 5A and 5B are schematic diagrams describing a procedure of the outline obtainment. In this embodiment, a main straight line element which is used to roughly recognize a placement state of the book B and singular points which are edge points at the page top, bottom, left, and right are detected as outline information of the book B, from the first captured image that is the image of the paper surface of the book B captured along with the placing surface 5 without the pointer F.

First, the main straight line element of an outer shape of the entire book is detected (ST 201). Herein, as shown in Fig. 5A, within the captured image, two straight lines indicating left and right side edges of the outer shape of the entire book B (side edges of a cover page, in general), and one straight line indicating a seam between the left and right pages are detected. This straight line element detection may be performed by the Hough transformation.

Further, edge detection is performed on the captured image (ST 202). This edge detection may be performed with the Canny method. Then, outline elements (pixels configuring the outline of the document) in the obtained edge image is extracted (ST 203). Thereafter, singular points, which are edge points at the page top, bottom, left, and right, are detected based on the obtained outline element (ST 204). Herein, six singular points are detected as the top, bottom, left, and right edge points of the page in the captured image of the two-page spread as shown in Fig. 5B.

Then, adequacy of the singular points obtained in the singular point detection (ST 204) is determined (ST 205). Herein, the adequacy of the singular points, which are edge points at the page top, bottom, left, and right, is determined by comparing the obtained singular points with the straight line element obtained in the straight line element detection (ST 201). When the singular points are determined as adequate, the singular points are confirmed (ST 206).

Each of the edge detection (ST 202), the outline element extraction (ST 203), and the singular point detection (ST 204) may be simultaneously be performed with the straight line element detection (ST 201).

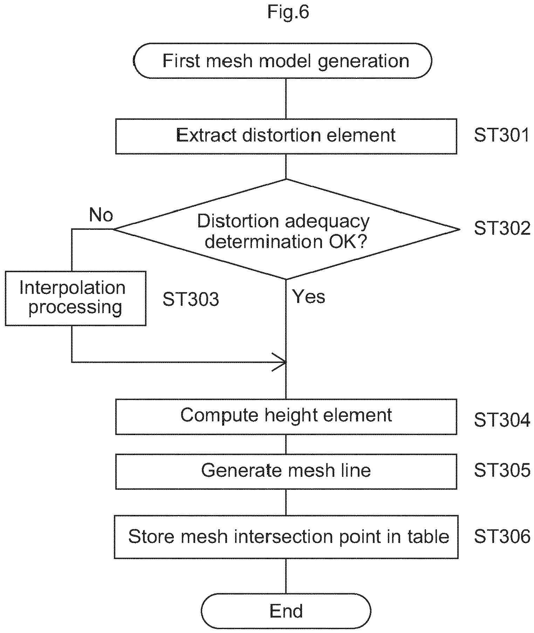

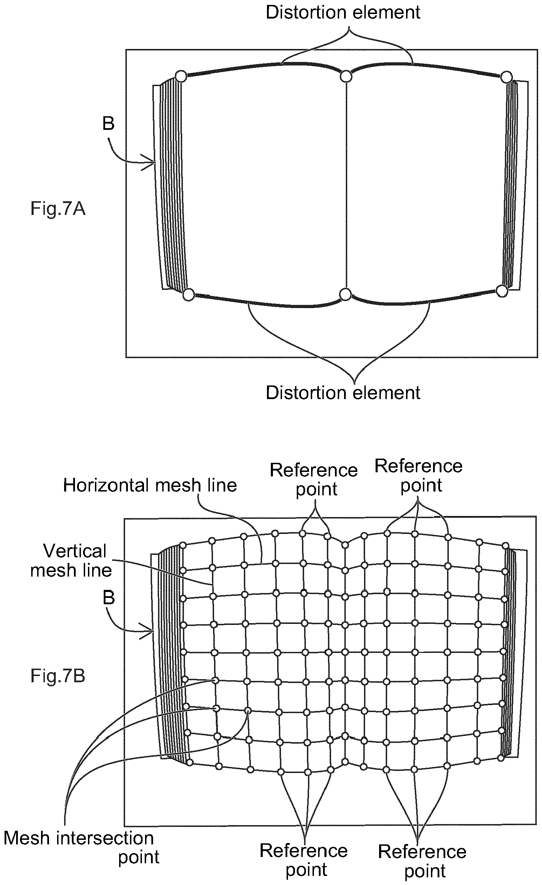

Fig. 6 is a flowchart illustrating steps of a primary mesh model generation (ST 104) shown in Fig. 3. Figs. 7A and 7B are schematic diagrams describing a procedure of a primary mesh model generation. Herein, a primary mesh model with respect to the entire paper surface of the book is generated from the first captured image, which is the image of the paper surface of the book B captured along with the placing surface 5 without the pointer F.

First, a distortion element is extracted, the distortion element indicating a distorted outline of a paper surface of the book B (ST 301). As shown in Fig. 7A, the outlines of an upper edge and a lower edge of the paper surface are displayed in a distorted state expanding outward. The distorted outline elements (pixels configuring an outline) of the upper and the lower edges of the page are extracted from the edge image obtained in the edge detection (ST 202) shown in Fig. 4. Then, adequacy of the distortion elements is determined based on continuality of the distortion elements (ST 302). Herein, when the distortion elements are determined as not adequate, an interpolation processing is performed on disconnected portions (ST 303). Thereby, the distortion elements become a continuous state without any break.

Thereafter, a computation is performed to convert the distortion element into a height element (ST 304). The outlines of the upper and the lower edges of the page are shown in a distorted state in the captured image because the paper surface is three-dimensionally distorted so as to project toward the upper side. Thus, the height element, which indicates three-dimensionally distorted state of the upper and the lower edges of the page, can be obtained based on the distortion elements indicating the outlines of the upper and the lower edges of the page. Specifically, the heights (coordinates of a Z axis) of the upper and the lower edges of the page with respect to the placing surface 5 are obtained at regular intervals. With the height element, an actual length of the upper and the lower edges of the page can be estimated.

Thereafter, horizontal and vertical mesh lines are generated (ST 305). The horizontal mesh line and the vertical mesh line intersect with each other at a mesh intersection point. A coordinate of the mesh intersection point is stored in a mesh table (ST 306). Herein, as shown in Fig. 7B, based on the height element of the upper and the lower edges of the page, a coordinate of a reference point is obtained, the reference point dividing a curvature, which indicates the upper and the lower edges of the page, into equal intervals according to the mesh number. By connecting respective reference points on the upper and the lower edges, a vertical mesh line is obtained. Then, a coordinate of a point (mesh intersection point) that divides the vertical mesh line into equal intervals according to the mesh number is obtained. By connecting the points, the horizontal mesh line is obtained.

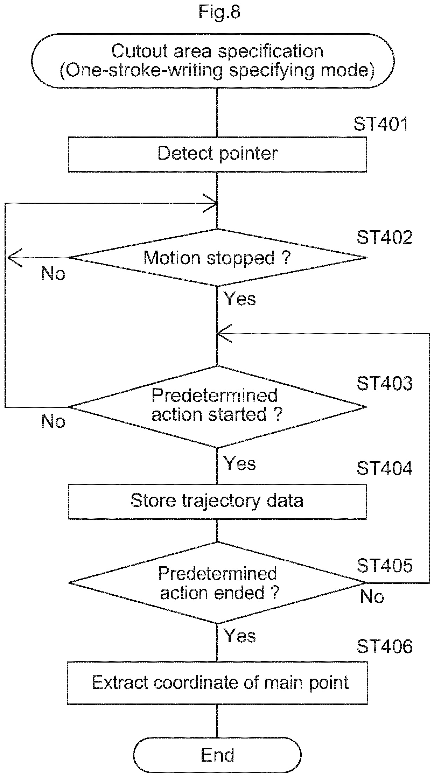

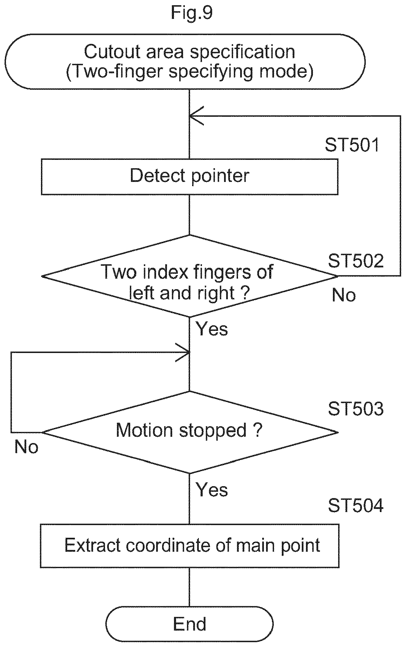

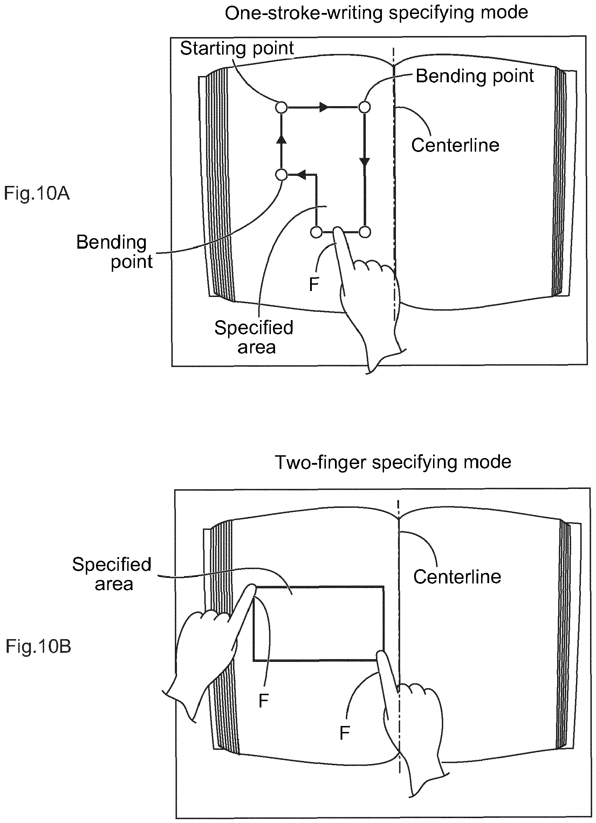

Figs. 8 and 9 are flowcharts illustrating steps of the cutout area obtainment (ST 105) shown in Fig. 3. Fig. 8 illustrates a case of a one-stroke-writing specifying mode (first area specifying mode), and Fig. 9 illustrates a case of a two-finger specifying mode (second area specifying mode). Figs. 10A and 10B are schematic diagrams describing procedures of the cutout area obtainments. Fig. 10A illustrates the case of the one-stroke-writing specifying mode, and Fig. 10B illustrates the case of the two-finger specifying mode, respectively.

The present embodiment includes the one-stroke-writing specifying mode (first area specifying mode) shown in Fig. 10A, and the two-finger specifying mode (second area specifying mode) shown in Fig. 10B, either of which a user may select.

As shown in Fig. 10A, in the one-stroke-writing specifying mode, the pointer F such as a finger, a pen, or the like is moved in a manner of one-stroke writing. A cutout area is obtained based on a specified area shown as a trajectory of a point specified by the pointer F. Particularly, in this embodiment, the pointer F is moved in a horizontal direction (direction orthogonally intersecting with a centerline or the seam of the pages) and in a vertical direction (direction parallel to the centerline), thereby specifying a polygonal area configured with horizontal lines and vertical lines. Thus, it is possible to specify an area without including any unnecessary area.

As shown in Fig. 8, in the one-stroke-writing specifying mode, first, the cutout area obtainer 33 detects the pointer F existing on the paper surface of the book B from the second captured image, which is the image of the paper surface of the book B captured along with the pointer F specifying an area to be cut out on the paper surface of the book B (ST 401). Herein, the pointer F is identified by shape identification. According to a shape of the pointer F, a point specified by the pointer F is determined. When a pointer is a finger, for example, a finger tip becomes the specified point.

Thereafter, it is determined whether or not the pointer F has stopped its motion for a predetermined time period (one second, for example) (ST 402). In a case where the pointer F has stopped its motion, it is then determined whether or not the pointer F has started a predetermined action (ST 403). In a case where the pointer F has started the predetermined action, tracking of a trajectory is started using the position where the pointer F has stopped first as a starting point. A coordinate of the obtained trajectory is stored in a memory (ST 404).

In this embodiment, a start of an area specifying action is detected when the pointer F stops and then moves in either left or right direction, that is, a direction substantially orthogonally intersecting with the centerline or the seam of the pages. Tracking of the trajectory is thus started. The trajectory of the pointer is drawn on a screen of the captured image displayed on the display 26.

Then, it is determined whether or not the predetermined specifying action has been ended, that is, whether or not the pointer has stopped its motion in a vicinity of the starting point (ST 405). In a case where the predetermined specifying action has been ended, tracking of the trajectory is ended, and main points of the specified area are extracted (ST 406). Herein, a polygonal area is specified, the polygonal area having vertexes that are bending points at which a movement direction of the pointer changes about 90°. These bending points and the starting point are extracted as the main points for the area specifying process. The polygonal-shaped specified area can be obtained by connecting the plurality of extracted bending points with a straight line in a clockwise order and a counter clockwise order indicated by the trajectory of the pointer.

In a case where the pointer F specifying an area is a user's finger or an ordinary pen used for writing, a process to identify the pointer F by shape identification is required. Alternatively, it is also possible to use a pointer that has an infrared light emitter at a tip thereof. In this case, infrared light coming out from the pointer appears in a captured image, and the infrared light may be detected.

On the other hand, as shown in Fig. 10B in the two-finger specifying mode, a cutout area is obtained based on a specified area having a rectangular shape whose vertexes in a diagonal direction are two points specified by the pointer F. Thus, an area can be easily specified with the pointer F. Particularly, herein, an area is specified by use of two index fingers of left and right. With two points specified by the two index fingers of left and right as vertexes in a diagonal direction, a rectangular area is specified. Upper and lower sides of the rectangular area are perpendicular to the centerline indicating the seam of the pages, and left and right sides of the rectangular area are parallel to the centerline.

As shown in Fig. 9, in the two-finger specifying mode, first, the cutout area obtainer 33 detects the pointer F existing on a paper surface of the book B from the second captured image, which is the image of the paper surface of the book B captured along with the pointer F specifying an area to be cut out on the paper surface of the book B (ST 501). Then, it is determined whether or not the detected pointer F is two index fingers of left and right (ST 502). In a case where the pointer F is the two index fingers of left and right, it is then determined whether or not the two index fingers of left and right have stopped their motion for a predetermined time period (one second, for example) (ST 503). In a case where the two index fingers of left and right have stopped their motion for the predetermined time period, coordinates of points specified by the two index fingers of left and right are obtained (ST 504).

Thereafter, from the two points specified by the two index fingers of left and right, respectively, straight lines parallel to the centerline indicating the seam of the pages and straight lines perpendicular to the centerline are extended. Intersection points of these lines are then obtained. The two intersection points obtained above and the two points specified by the index fingers are extracted as main points for an area specifying process. A rectangular area connecting the four main points becomes a specified area.

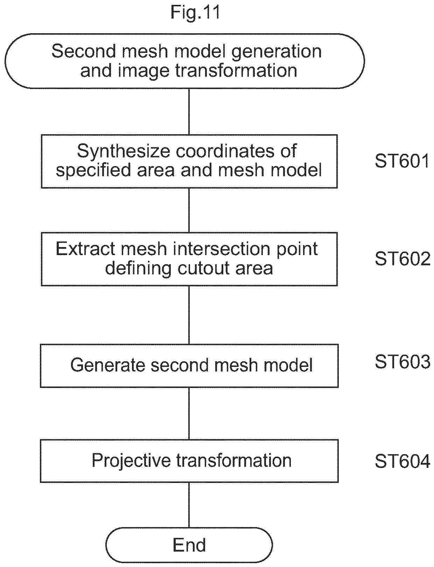

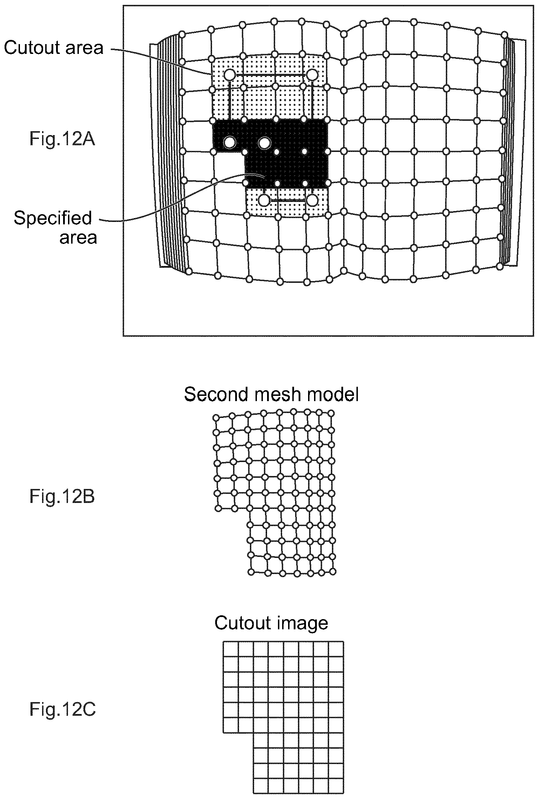

Fig. 11 is a flowchart illustrating steps of the secondary mesh model generation and the image transformation (ST 106) shown in Fig. 3. Figs. 12A to 12C are schematic diagrams describing a procedure of the secondary mesh model generation and the image transformation. Herein, a secondary mesh model is generated with respect to a cutout area. Based on the secondary mesh model, an image of the cutout area is planarized by projective transformation.

First, the secondary mesh model generator 34 synthesizes the coordinates of the main points of the specified area obtained by the cutout area obtainments shown in Figs. 8 and 9 to the coordinates of the primary mesh model (ST 601). Then, mesh intersection points are extracted, the mesh intersection points defining a cutout area from which an image is actually cut out based on the specified area (ST 602). Herein, as shown in Fig. 12A, an area that connects the mesh intersection points outside the specified area so as to surround the specified area is set as a cutout area. Thereafter, as shown in Fig. 12B, with respect to the cutout area including the specified area, a secondary mesh model having spacing smaller than that of the primary mesh model is generated (ST 603).

The secondary mesh model can be generated by obtaining mesh intersection points that divide the primary mesh model such that spaces between each of the mesh intersection points become equal. An average size of a character is about 10 points (having a width of 3.5 mm). For example, when mesh spacing of the primary mesh model is 10.5 mm that is equivalent to three average sized characters of 10 points, the mesh spacing of the secondary mesh model is set to be one character of 10 points, that is, 3.5 mm or 1/3 of the mesh spacing of the primary mesh model.

Thereafter, the cutout image generator 35 performs planarization by projective transformation with respect to only an image portion corresponding to the cutout area for which the secondary mesh model has been generated, (ST 604). Thereby, as shown in Fig. 12C, a cutout image can be obtained by planarizing only the cutout area.

As described above, an image planarization is performed using the secondary mesh model having the smaller mesh spacing, therefore it is possible to increase transformation accuracy of the planarization. In addition, it is possible to obtain a cutout image of high quality having a smaller distortion. Furthermore, since only an image portion corresponding to a necessary cutout area is planarized, a burden of computation required for planarization is reduced, thereby making it possible to increase the processing speed.

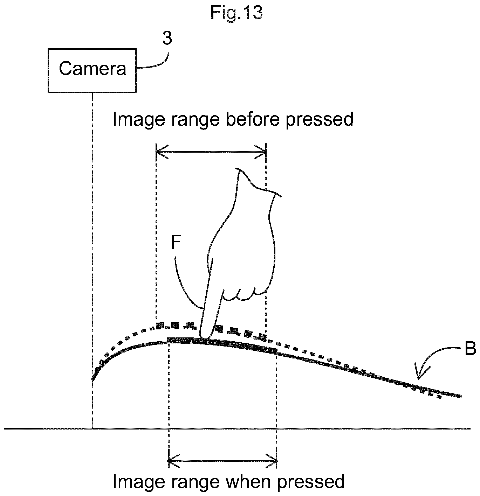

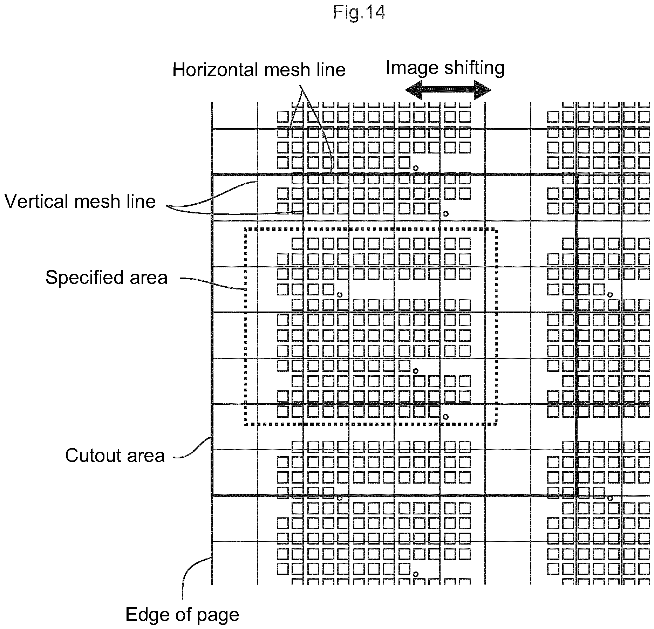

Herein, a description is provided for image shifting that occurs at the time of specifying an area with the pointer F such as a finger, a pen, or the like. Fig. 13 schematically illustrates a state of a paper surface of a book when a cutout area is specified with the pointer F. Fig. 14 is a schematic diagram illustrating a specified area obtained by connecting points specified with the pointer F and a cutout area from which an image is actually cut out. Fig. 14 illustrates an example of an image of a paper surface on which character strings are written.

As shown in Fig. 13, when book paper surfaces are naturally opened, there are gaps among papers. Therefore, when the book paper surface is pressed by the pointer F such as a finger, a pen, or the like at the time of specifying an area, the paper of the book B sags due to pressure from the pointer F. In accordance with the sag of the paper, an image of the paper surface shifts to the left and right. Thus, in this embodiment, the cutout area obtainer 33 sets a cutout area so as to include a predetermined margin around the specified area connecting the points specified by the pointer F. Thereby, an area that is larger by the margin portion than the area specified with the pointer F is cut out. Therefore, an image of the area specified with the pointer F is successfully cut out regardless of the image shifting due to displacement of the paper pressed by the pointer F at the time of specifying the area.

A width of the margin to be secured around the specified area at the time of setting a cutout area may be determined based on an amount of image shifting according to the sag of the paper due to pressure from the pointer F such as a finger, a pen, or the like. An amount of image shifting is different depending on a book type (a magazine, a hardcover, or the like) and a paper quality, but an expected value is about 5 mm at greatest. This value is roughly equivalent to two average sized characters of 10 points (having a width of 3.5 mm). Accordingly, it is preferable that a margin equivalent to at least two characters of 10 points be secured.

Particularly, in this embodiment, as shown in Fig. 14, a cutout area is obtained using a mesh line surrounding the specified area in the primary mesh model as a border line. In the shown example, the mesh line immediately outside the mesh line closest to the specified area is used as the border line of the cutout area. Thus, a margin larger than or equal to the mesh spacing can be always secured. With mesh spacing of a primary mesh model being properly set, a required margin is secured. Thus, regardless of image shifting occurring at the time of specifying an area with a pointer, an image of the specified area can be successfully cut out with no missing portion.

In this case, the mesh spacing of the primary mesh model may be set such that at least three characters are included in one mesh. Since an average size of a character is about 10 points (having a width of 3.5 mm), as calculated as three characters of 10 points, the mesh becomes a square of 10.5 mm (3.5 mm x 3) or more.

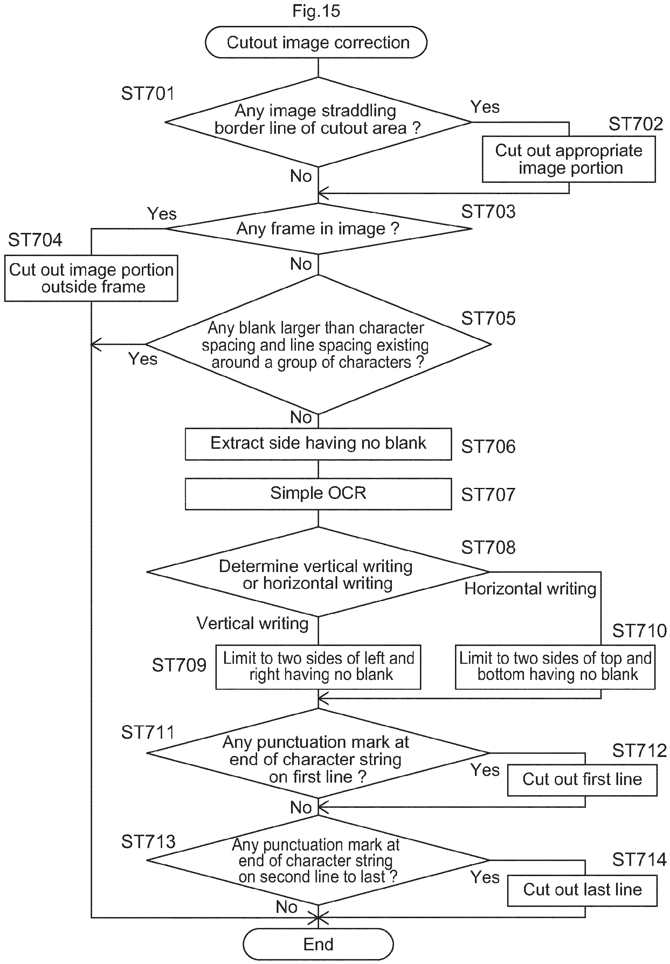

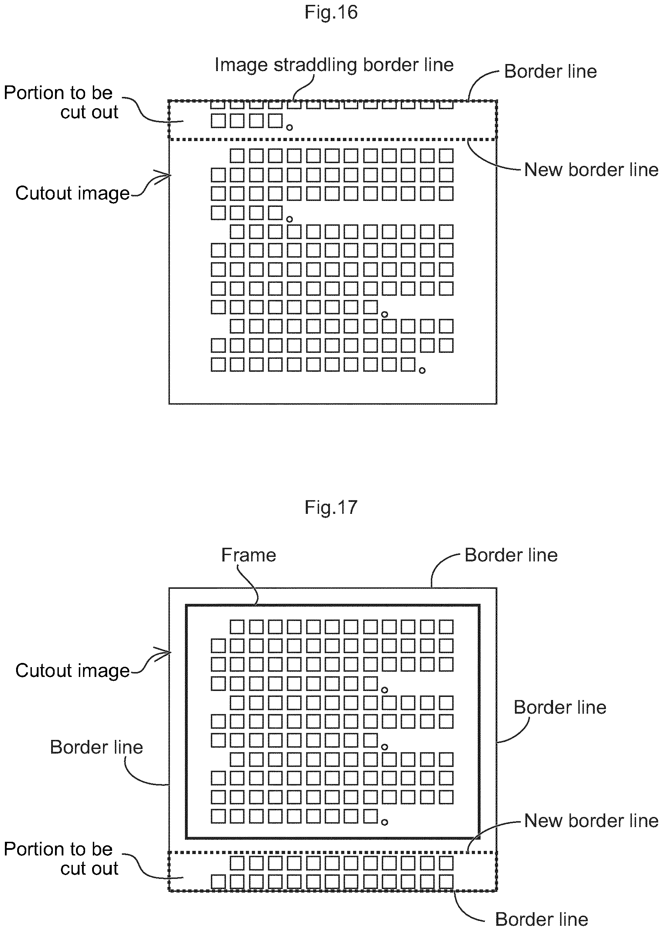

Fig. 15 is a flowchart illustrating steps of the cutout image correction (ST 107) shown in Fig. 3. Figs. 16 to 18B each schematically illustrate a sate of each processing performed during the cutout image correction. Figs. 16 to 18B illustrate examples of an image of a paper surface on which character strings are written.

As described above, the cutout area is the area larger than the area actually specified by the pointer. Thus, an unnecessary image is included in a peripheral area of the cutout image obtained by the above-described processing. Therefore, the unnecessary portion is cut out from the cutout image in order to obtain a final cutout image.

As shown in Figs. 15 and 16, first, it is determined whether or not there is any image straddling the border line of the cutout area (ST 701). In a case where such an image exists, a border line is set inside the image, and an appropriate image is cut out along the new border line (cut-out line) (ST 702). When an image of a paper surface is cut out, the image is generally cut out so as not to divide the image in the middle. Thus, the image straddling the border line of the cutout area is considered as an unnecessary portion existing in the secured extra margin, and thus may be removed.

Thereafter, as shown in Figs. 15 and 17, it is determined whether or not there is any frame within the cutout image (ST 703). In a case where there is a frame, a border line is set on an inner side of the image existing outside the area enclosed by the frame. An appropriate image portion is cut out along the new border line (cut-out line) (ST 704). When an area enclosed by a frame is cut out, in general, only the area enclosed by the frame is cut out in many cases. Thus, the image existing outside the area enclosed by the frame is considered as an unnecessary portion existing in the secured extra margin, and thus may be removed.

On the other hand, in a case where there is no frame within the cutout image, it is determined whether or not any blank larger than character spacing and line spacing exists around a group of characters (ST 705). In a case where there is no such a blank, a side having no blank is extracted (ST 706).

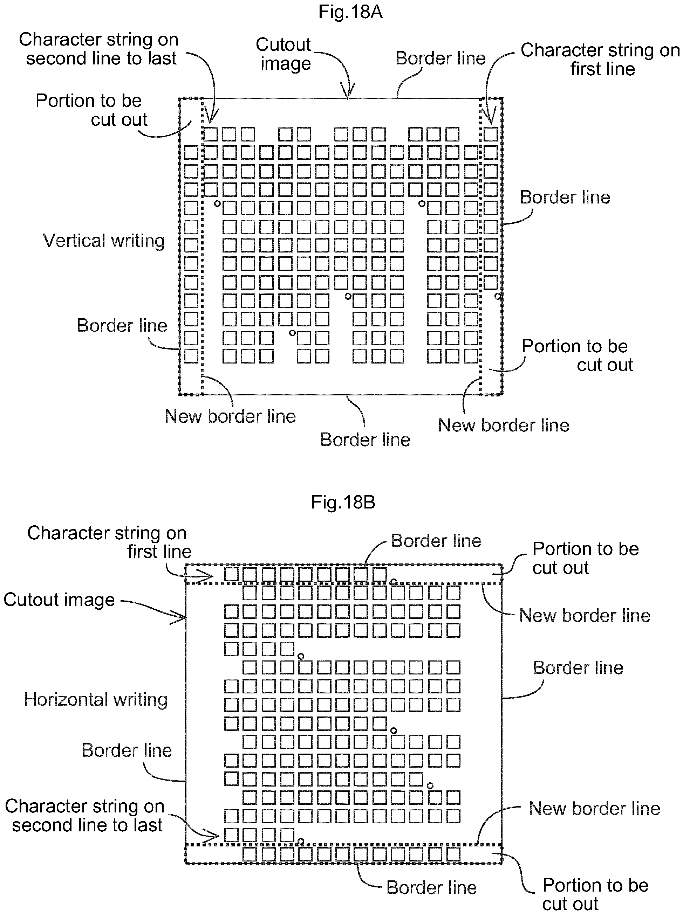

Thereafter, as shown in Figs. 15, 18A and 18B, segments of sentences are determined based on a position of a punctuation mark. An image of a group of characters, which is located on an outer side of the character string existing in a peripheral area of the cutout image and having a punctuation mark, is removed. When a text is partially cut out, in general, a range divided by a punctuation mark is often cut out, and a text is not cut out in the middle of a segment. Thus, the image of the group of characters located on the outer side of the punctuation mark existing in the peripheral area of the cutout image is considered as an unnecessary portion existing in the secured extra margin, and thus may be removed. Further, a portion that is removable based on a punctuation mark is different depending on a writing direction (horizontal writing and vertical writing). In a case of horizontal writing, an image of a group of characters situated above and below a sentence segment to be left may be removed. In a case of vertical writing, an image of a group of characters situated to the left and the right of a sentence segment to be left may be removed.

In this embodiment, a simple OCR is first performed on the character strings in the cutout image (ST 707). Based on the result of the simple OCR, a writing direction, that is, either one of vertical writing and horizontal writing, is determined (ST 708). In this embodiment, the determination is made based on a positional relationship of a punctuation mark. When a punctuation mark is positioned on a right side below a preceding character, it is determined as vertical writing. When a punctuation mark is positioned on a lower side to the right of a preceding character, it is determined as horizontal writing. Then, in a case of vertical writing, processes thereafter are performed only on the right and the left sides having no blank (ST 709). In a case of horizontal writing, processes thereafter are performed only on the upper and the lower sides having no blank (ST 710).

Next, it is determined whether or not there is a punctuation mark at the end of a character string on the first line (ST 711). In a case where there is a punctuation mark at the end of the character string on the first line, a border line is set on an inner side of the character string on the first line. Then, an image of the character string on the first line is cut out along the new border line (cut-out line) (ST 712). Thereafter, it is determined whether or not there is any punctuation mark at the end of a character string on the second line to the last (ST 713). In a case where there is a punctuation mark at the end of the character string on the second line to the last, a border line is set on an inner side of the character string on the last line. An image of the character string on the last line is cut out along the new border line (cut-out line) (ST 714).

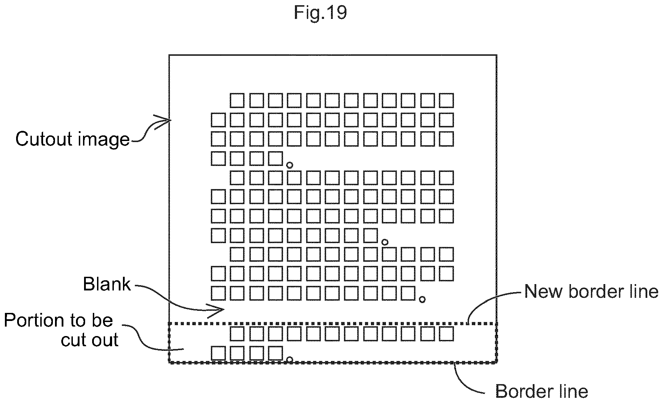

Fig. 19 is a schematic diagram illustrating another example of a processing performed during the cutout image correction. Herein, an image is removed when it is positioned on an outer side of a blank larger than character spacing and line spacing within the cutout image. When a blank larger than character spacing and line spacing exists in a text, in general, a group of characters is cut out at the position of the blank as a border. Thus, an image positioned on the outer side of the blank is considered as an unnecessary potion existing in the secured extra margin, and thus may be removed. In this case, the unnecessary character string may be removed with no determination of sentence segments described above.

In addition, in the above-described example, as shown in Fig. 2, the captured image data is transmitted from the book scanner to the PC, and a processing to cut out an image is performed in the PC. However, it is also possible to configure a book scanner so as to perform such an image processing. In other words, a book scanner may be configured to include an image processing apparatus. In this case, an image may be displayed on a display such as a TV receiver or the like.

Furthermore, in the above-described example, only a cutout area including an area specified by use of a pointer such as a finger, a pen, or the like is planarized to obtain a cutout image. However, an image portion corresponding to the cutout area may be cut out after planarization is performed on an entirety of a paper surface of a book.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

## Claims

1. An image processing apparatus, comprising:
a captured image obtainer (22) obtaining a first captured image and a second captured image, the first captured image being an image of a paper surface of a document captured along with a placing surface without a pointer, and the second captured image being an image of the paper surface of the document captured along with the pointer specifying an area to be cut out on the paper surface of the document;
a cutout area obtainer (33) detecting a point specified by the pointer from the second captured image and obtaining a cutout area; and
a cutout image generator (35) obtaining a cutout image by planarizing a portion of the first captured image corresponding to at least the cutout area obtained by the cutout area obtainer.

2. The image processing apparatus according to claim 1, further comprising:
a primary mesh model (32) generator generating a primary mesh model based on the first captured image; and
a secondary mesh model generator (34) generating a secondary mesh model based on the first captured image, the secondary mesh model having mesh spacing smaller than that of the primary mesh model,
wherein the cutout area obtainer obtains the cutout area using the primary mesh model; and
the cutout image generator performs image planarization using the secondary mesh model.

3. The image processing apparatus according to claim 2, wherein the secondary mesh model generator generates the secondary mesh model with respect to the cutout area only; and
the cutout image generator planarizes only an image portion that corresponds to the cutout area, using the secondary mesh model.

4. The image processing apparatus according to claim 2, wherein the cutout area obtainer obtains the cutout area using a mesh line as a boarder line, the mesh line surrounding the specified area in the primary mesh model.

5. An image processing apparatus, comprising:
a captured image obtainer (22) obtaining a first captured image and a second captured image, the first captured image being an image of a paper surface of a document captured along with a placing surface without a pointer, and the second captured image being an image of the paper surface of the document captured along with the pointer specifying an area to be cut out on the paper surface of the document;
a cutout area obtainer (33) detecting a point specified by the pointer from the second captured image and obtaining a cutout area such that a predetermined margin is secured around the specified area provided by connecting the points;
a cutout image generator (35) obtaining a cutout image by planarizing a portion of the first captured image corresponding to at least the cutout area obtained by the cutout area obtainer; and
an image corrector (36) removing an unnecessary image portion appearing in a peripheral area of the cutout image obtained by the cutout image generator.

6. The image processing apparatus according to claim 5, wherein the image corrector removes an image straddling a border line of the cutout area.

7. The image processing apparatus according to claim 5, wherein, when there is a frame on the paper of the document in the cutout area, the image corrector removes an image existing outside the area enclosed by the frame.

8. The image processing apparatus according to claim 5, wherein, in an image of a text, the image corrector removes an image of a group of characters located on an outer side of a character string existing in a peripheral area of the cutout image and having a punctuation mark.

9. The image processing apparatus according to claim 5, wherein, in an image of a text, the image corrector removes an image located on an outer side of a blank larger than character spacing and line spacing.

10. The image processing apparatus according to claim 5, wherein, the cutout area obtainer obtains the cutout area based on a specified area shown as a trajectory of a point specified by the pointer.

11. The image processing apparatus according to claim 5, wherein, the cutout area obtainer obtains the cutout area based on a specified area having a rectangular shape whose vertexes in a diagonal direction are two points specified by the pointer.

12. A document scanning system, comprising:
the image processing apparatus (2) according to claim 5; and
an image inputting device (1) having a camera,
wherein the image inputting device captures an image of a paper surface of a document along with a placing surface without a pointer and an image of the paper surface of the document along with the pointer specifying an area to be cut out on the paper surface of the document, and sends the first captured image and the second captured image to the image processing device.

13. An image processing apparatus, comprising:
a captured image obtainer (22) obtaining a first captured image and a second captured image, the first captured image being an image of a paper surface of a document captured along with a placing surface without a pointer, and the second captured image being an image of the paper surface of the document captured along with the pointer specifying an area to be cut out on the paper surface of the document;
a cutout area obtainer (33) detecting a point specified by the pointer from the second captured image and obtaining a cutout area; and
a cutout image generator (34) obtaining a cutout image by planarizing a portion of the first captured image corresponding to at least the cutout area obtained by the cutout area obtainer,
wherein, when the pointer stops for a predetermined time period after moving and then starts moving again, the cutout area obtainer stores a plurality of position data indicating positions at which the pointer has stopped for the predetermined time period, and obtains a cutout area based on the position data.

14. The image processing apparatus according to claim 13, wherein, when the pointer stops for a predetermined time period and then starts moving in either one of right and left directions, the cutout area obtainer stores a plurality of position data indicating positions at which the pointer has stopped for the predetermined time period, and obtains a cutout area based on the position data.

15. An image processing method, including:
obtaining a first captured image and a second captured image, the first captured image being an image of a paper surface of a document captured along with a placing surface without a pointer, and the second captured image being an image of the paper surface of the document captured along with the pointer specifying an area to be cut out on the paper surface of the document;
detecting a point specified by the pointer from the second captured image and cutting out a specified area such that a predetermined margin is secured around the specified area provided by connecting the points;
planarizing a portion of the first captured image corresponding to at least the cutout area having the predetermined margin around the specified area provided by connecting the points and obtaining a cut-out image; and
removing an unnecessary image portion appearing in a peripheral area of the cutout image obtained by planarization.
